# EUROPEAN PATENT APPLICATION

(11) **EP 4 797 451 A1**
(43) Date of publication of application: **26.08.2026**
(21) Application number: 24879390.3
(22) Date of filing: 16.07.2024
(51) Int. Cl.: H01Q 13/26, H01Q 3/22, H01Q 11/14, H02J 50/27

(54) **RECTENNA DEVICE AND ANTENNA CIRCUIT USED THEREFOR**

(30) Priority: 18.10.2023 JP 2023179689
(71) Applicant: Kanazawa Institute of Technology, Nonoichi-shi Ishikawa 921-8501 (JP)
(72) Inventor: NOGUCHI, Keisuke, Nonoichi-shi, Ishikawa 921-8501 (JP); ITO, Kenji, Nonoichi-shi, Ishikawa 921-8501 (JP); SAKAI, Naoki, Nonoichi-shi, Ishikawa 921-8501 (JP)
(74) Representative: Wunderlich & Heim Patentanwälte PartG mbB
(86) International application number: PCT/JP2024/025470
(87) International publication number: WO 2025/083959

(57) **Abstract**

An object is to provide a rectenna device having a high impedance and a high gain and capable of beam scanning based on a frequency, and an antenna circuit suitable for the rectenna device.

A rectenna device includes an antenna circuit and a rectifier circuit, the antenna circuit is in a traveling-wave rampart shape.

## Description

### TECHNICAL FIELD

The present invention relates to a rectenna device used for wireless power transmission to a mobile device such as an unmanned aircraft and a terminal device such as a smartphone, and an antenna circuit suitable for the rectenna device.

### BACKGROUND ART

A rectenna is a composite device composed of an antenna and a rectifier circuit.

In recent years, building a communication platform using a quasi-millimeter wave band of 20 to 30 GHz has been studied.

For building such a communication platform, a rectenna device capable of wirelessly transmitting power to a mobile device and a mobile terminal is required.

For the rectenna device of this kind, a traveling-wave antenna has been studied for its wide frequency band and from a viewpoint of obtaining a high gain at a high impedance.

For example, Non Patent Document 1 reports a modified comb-line antenna radiating a circularly polarized wave, and Non Patent Document 2 reports a microstrip comb-line antenna.

However, these antenna circuits are insufficient for widening a frequency band or are insufficient for beam scanning based on a frequency.

### RELATED-ART DOCUMENT

### NON PATENT DOCUMENT

Non Patent Document 1: "A Modified Comb-Line Antenna Radiating a Circularly Polarized Wave" IEICE Transactions on Communications, Vol. J86-B, No. 10, PP. 2174-2181, October 2003
Non Patent Document 2: "Two-dimensional Design of Center-feeding Microstrip Comb-line Antenna with Travelling-wave Operation in Quasi-millimeter-wave Band" IEICE Technical Report, AP2016-04

### SUMMARY OF THE INVENTION

### TECHNICAL PROBLEM

An object of the invention is to provide a rectenna device having a high impedance and a high gain and capable of beam scanning based on a frequency, and an antenna circuit suitable for the rectenna device.

### SOLUTION TO PROBLEM

A rectenna device according to the invention includes an antenna circuit and a rectifier circuit for rectifying alternating current power from the antenna circuit, the antenna circuit is in a traveling-wave rampart shape. The antenna circuit may include a ground conductor layer, a microstrip line in a zigzag shape, and a dielectric layer.

Here, in the dielectric layer, an air layer is also included.

In addition, the antenna circuit is, for example, in a form having the dielectric layer on the ground conductor layer and the microstrip line on the dielectric layer, and the dielectric layer may be arranged on the microstrip line.

In the invention, by having the antenna circuit in the traveling-wave rampart shape, a high gain is obtained in a wide frequency band.

Further, the antenna circuit of the invention is capable of beam scanning based on a frequency.

In the invention, the microstrip line preferably includes n stages (n is a natural number) of a line, each stage having four bend portions.

Here, by forming a rampart shape in which an element of each stage set in a crank shape with the four bend portions is extended in multiple stages of n = about 3 to 10, the gain can be increased and efficiency can be improved.

Here, the transmission line termination may be load-matched to the ground side based on the number of radiating element stages, or may be open by increasing an n number.

In the rectenna device according to the invention, the antenna circuit is in a dipole shape with a first microstrip line and a second microstrip line formed on both sides of the rectifier circuit, the first microstrip line and the second microstrip line can be in a mutually asymmetric structure, and thus, the beam scanning based on the frequency is made possible in a wider range.

By designing the antenna circuit as a dipole configuration, phase adjustment can be achieved through asymmetric structures on the left and right sides. This is accomplished by making right and left line lengths (electric lengths) different, making the dimensions of each stage non-periodic, varying the width of the lines in the extension direction for each stage, or arranging the elements in parallel. This enables beam scanning over a wide range of frequencies.

Here, the antenna circuit may be a direct power supply type, or may be a non-contact power supply with a half wavelength loop disposed via a free space or the dielectric layer.

When the antenna circuit is the non-contact power supply by a minute loop, an impedance can be increased without changing a beam shape.

In the present invention, the antenna circuit may be in a monopole shape formed by the rectifier circuit and the microstrip line, and the microstrip line may be in an aperiodic structure.

In this case as well, by adjusting the number of stages of the elements or the phase or parallelizing the elements, the beam scanning based on the frequency is made possible.

An antenna circuit for a rectenna according to the invention is in a rampart shape, and the antenna circuit may include n stages (n is a natural number) of a line, each stage of the line being formed by four bend portions including a first line and a fifth line in the extending direction of the line and a second line and a fourth line bent in a direction substantially perpendicular to the extending direction from the first and fifth lines, with a third line connecting the second and fourth lines.

In this case, by making a cutout or a projection or the like on the line at the bend portion, a reflection amount can be adjusted.

### ADVANTAGEOUS EFFECTS OF INVENTION

In the rectenna device according to the invention, by attaining a microstrip line in which the element of each stage formed by a crank-shaped line is extended in the multiple stages as the antenna circuit, the gain is increased, the frequency band is widened, and the beam scanning (beam steering) by the frequency is made possible.

### BRIEF DESCRIPTION OF THE DRAWINGS

FIG. 1 illustrates an example of an antenna model in a traveling-wave rampart shape with n = 3, and FIG. 1A is a bird's-eye view, FIG. 1B is a top view, FIG. 1C is an enlarged view of one stage, and FIG. 1D is an enlarged view of a cutout.
FIG. 2 illustrates a simulation result when a dielectric is air, and FIG. 2A illustrates radiation efficiency, FIG. 2B illustrates a Smith chart, and FIG. 2C illustrates a total gain pattern on a ZX plane.
FIG. 3 illustrates a simulation result when the dielectric is alumina, and FIG. 3A illustrates the radiation efficiency, FIG. 3B illustrates the Smith chart, and FIG. 3C illustrates the total gain pattern on the ZX plane.
FIG. 4 illustrates a simulation result of an antenna circuit in a dipole shape.
FIG. 5 illustrates an example of a mutually asymmetric structure in the antenna circuit in the dipole shape.
FIG. 6 illustrates an example of using different materials for dielectrics on right and left.
FIG. 7 illustrates an example of an aperiodic structure in an antenna circuit in a monopole shape.

### DESCRIPTION OF EMBODIMENTS

Simulation analysis was conducted on a structure of an antenna circuit in a rectenna device according to the present invention, and it will be described below.

For simulation, FEKO, Ver. 7 was used.

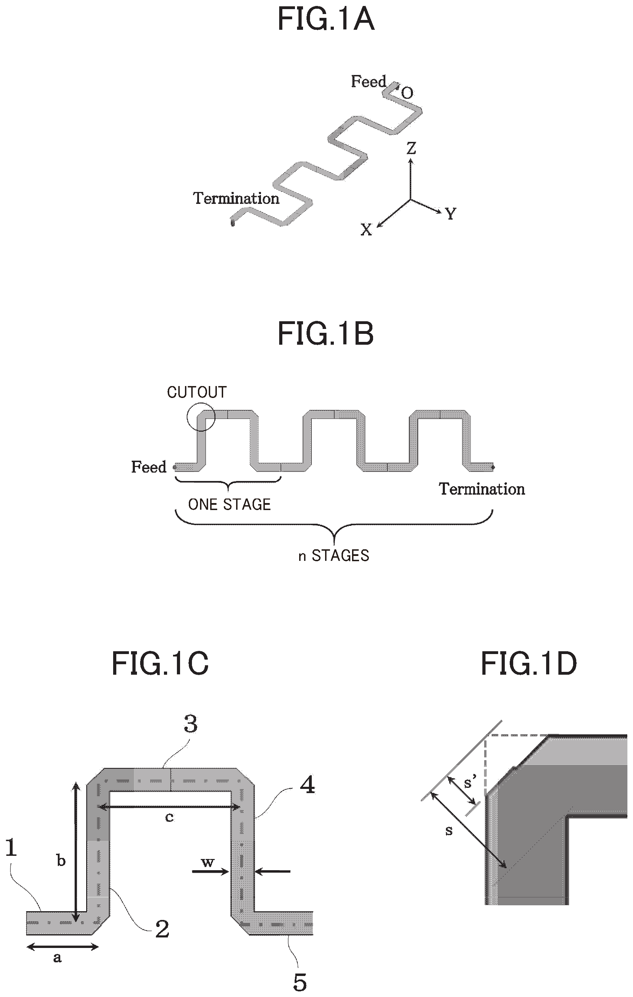

FIG. 1A to FIG. 1D schematically illustrate an antenna model in a traveling-wave rampart shape.

The antenna circuit includes a dielectric layer made of a dielectric such as an air layer, alumina, aluminum nitride, or a resin on a ground conductor layer, and includes a microstrip line on the dielectric layer, however, only the microstrip line is indicated in FIG. 1A to FIG. 1D.

In addition, the dielectric layer may be arranged on the microstrip line.

An element of a first stage (n = 1) of the microstrip line includes four bend portions formed by a first line 1 along an extending direction of a line, a second line 2 bent in a substantially perpendicular direction from the first line 1, a third line 3 bent in the extending direction from the second line 2, a fourth line bent substantially perpendicularly from the third line 3, and further, a fifth line bent in the extending direction from the fourth line.

When this is expressed in accordance with description of claims, the microstrip line is in a structure that includes the first line 1 and a fifth line 5 along the extending direction of the line, and the second line 2 and a fourth line 4 bent in the direction substantially perpendicular to the extending direction from the first and fifth lines 1 and 5, with the third line 3 connecting the second and fourth lines 2 and 4.

Parameters used for the simulation were set as a frequency: 20 to 28 GHz, the dielectric: air or alumina, dimensions: a = λ/8, b = λ/4, and c = λ/4 when a wavelength is defined as λ, a line width w = 0.5 mm, a line thickness t = 0.5 mm, the number of stages: n = 3, a cutout amount: Ft = s'/s, and termination: 100 Ω.

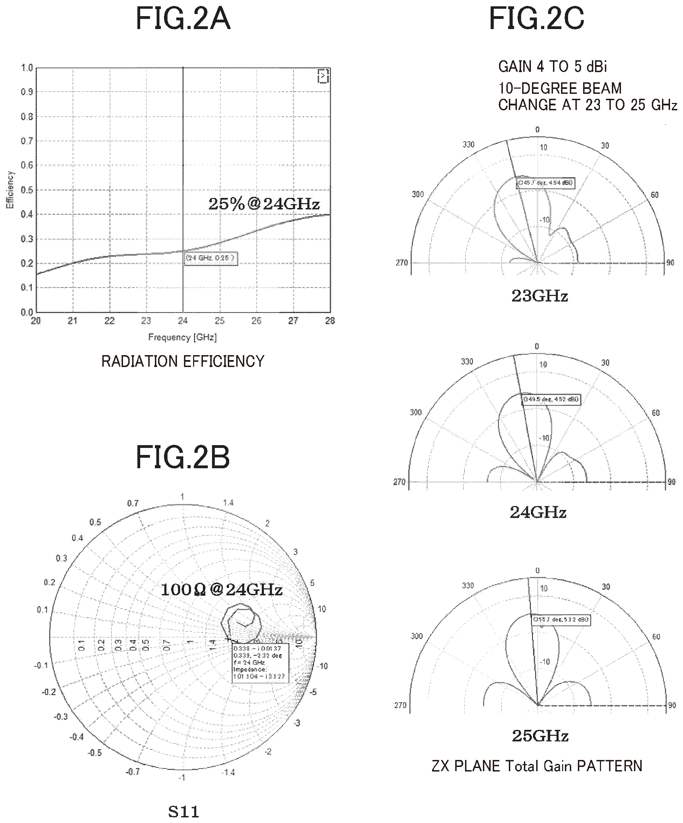

FIG. 2A to FIG. 2C illustrate a result of using air for the dielectric and performing analysis under conditions that the parameters were set as the frequency: 20 to 28 GHz, the dielectric: air, the dimensions: a = λ/8, b = λ/4, and c = λ/4, w = 0.5 mm, t = 0.5 mm, the number of stages: n = 3, the cutout amount: Ft = 0.4, and the termination: 100 Ω.

While linearly polarized waves are normally generated when the dimensions are a = λ/8, b = λ/4, and c = λ/4, by changing a length ratio of the dimensions b and c, circularly polarized waves can be generated.

It has been recognized that the gain is 4 to 5 dBi, and change of 10° is generated in a beam pointing direction among 23 GHz, 24 GHz, and 25 GHz.

Note that an impedance was 100 Ω and radiation efficiency was 25% at 24 GHz.

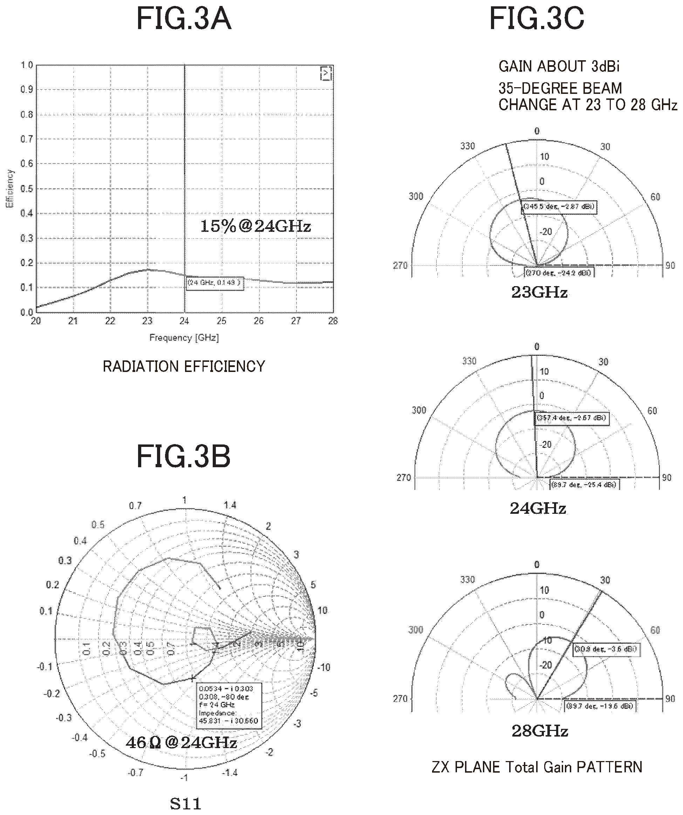

FIG. 3A to FIG. 3C illustrate an example of using alumina for the dielectric, and the parameters were set as the frequency: 20 to 28 GHz, the dielectric: alumina (er = 9.75, tand = 0.0003), the dimensions: a = λ/8, b = λ/4, and c = λ/4, w = 0.5 mm, t = 0.3 mm, the number of stages: n = 3, the cutout amount: Ft = 0.4, and the termination: 100 Ω.

The gain was about 3 dBi, and the change of 35° was recognized in the beam pointing direction among 23 GHz, 24 GHz, and 28 GHz.

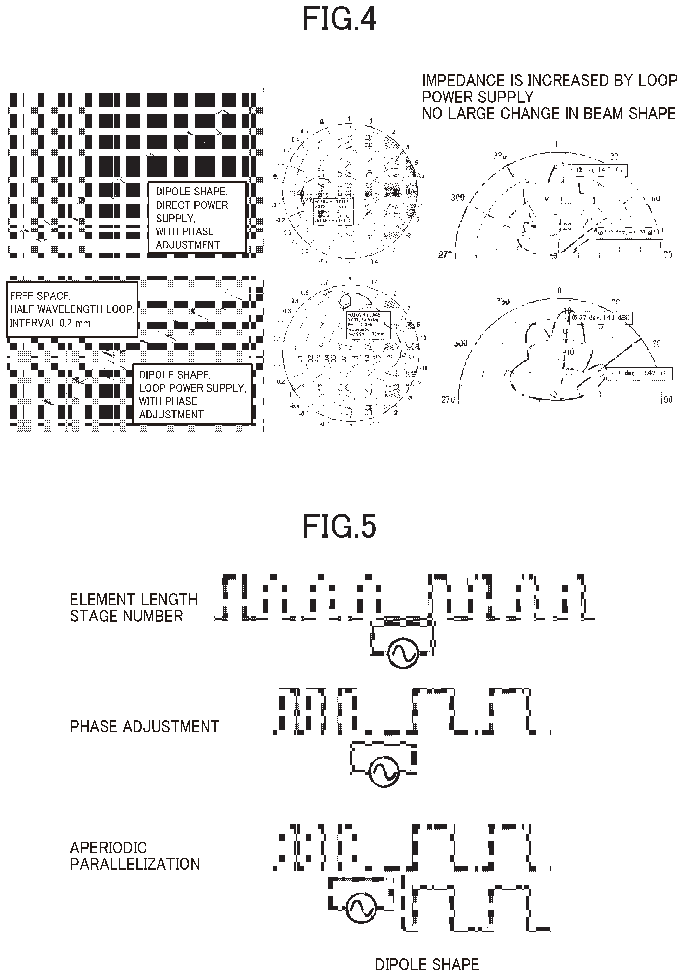

FIG. 4 illustrates a result of analysis in the antenna circuit in a dipole shape.

In FIG. 4, the microstrip line and a power supply system are illustrated at a left end, and a Smith chart and a total gain pattern are illustrated on its right side corresponding to the microstrip line and the power supply system.

When these two power supply systems are compared, there is no large change in a beam shape in a non-contact structure by loop power supply, but the impedance can be increased.

FIG. 5 illustrates pattern examples of the microstrip line.

The examples of making the first microstrip line and the second microstrip line respectively on the left and right (both sides) of the rectifier circuit be in an asymmetric structure are illustrated.

The example indicated as an element length stage number shows an example of making electric lengths be different by changing the numbers of stages of the first microstrip line on a left side and the second microstrip line on a right side for a non-contact power supply part of a minute loop.

The example indicated as phase adjustment shows an example of changing lengths of the first line (fifth line) and the third line in FIG. 1C among the lines forming crank shapes on the right and left.

The example indicated as aperiodic parallelization shows an example of parallelizing the second microstrip line side.

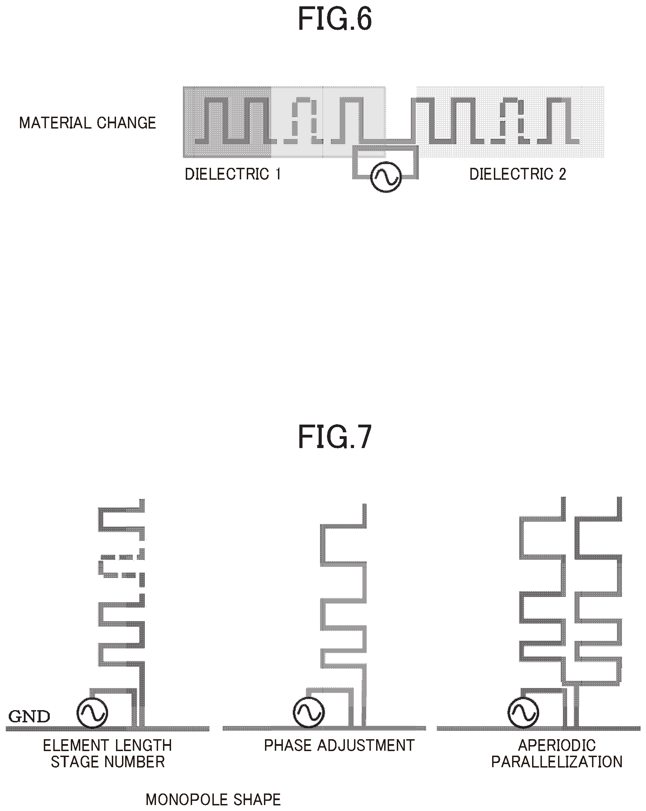

In addition, the dielectrics 1 and 2 may be different from each other on the left and right as illustrated in FIG. 6.

FIG. 7 is an example of making the element be in an aperiodic structure in the antenna circuit in a monopole shape.

FIG. 7 illustrates an example of changing the number of stages of the element, an example of changing the phase, and an example of the aperiodic parallelization, respectively.

### INDUSTRIAL APPLICABILITY

The rectenna device according to the invention has a high impedance and a high gain and is capable of beam scanning based on the frequency.

## Claims

1. A rectenna device comprising an antenna circuit and a rectifier circuit, wherein
the antenna circuit is in a traveling-wave rampart shape.

2. The rectenna device according to claim 1, wherein the antenna circuit includes a ground conductor layer, a microstrip line in a zigzag shape, and a dielectric layer.

3. The rectenna device according to claim 2, wherein the microstrip line includes n stages (n is a natural number) of a line, each stage having four bend portions.

4. The rectenna device according to claim 3, wherein
the antenna circuit is in a dipole shape with a first microstrip line and a second microstrip line formed on both sides of the rectifier circuit, and
the first microstrip line and the second microstrip line are in a mutually asymmetric structure.

5. The rectenna device according to claim 3, wherein
the antenna circuit is in a monopole shape formed by the rectifier circuit and the microstrip line, and
the microstrip line is in an aperiodic structure.

6. An antenna circuit for a rectenna used in the rectenna device according to any one of claims 1 to 5,
the antenna circuit comprising n stages (n is a natural number) of a line, each stage of the line being formed by four bend portions including a first line and a fifth line in an extending direction of the line, and a second line and a fourth line bent in a direction substantially perpendicular to the extending direction from the first and fifth lines, with a third line connecting the second and fourth lines.

7. The antenna circuit for a rectenna according to claim 6, wherein a cutout or a projection is made on the line at each of the bend portions.

8. The antenna circuit for a rectenna according to claim 6, wherein the antenna circuit is a non-contact power supply type.
